**Europäisches Patentamt**

**European Patent Office**

**Office européen des brevets**

(19)

(11) Numéro de publication: **0 196 978**
**B1**

(12) **FASCICULE DE BREVET EUROPEEN**

(45) Date de publication du fascicule du brevet:
**27.09.89**

(21) Numéro de dépôt: **86400704.2**

(22) Date de dépôt: **02.04.86**

(51) Int. Cl.⁴: **E 01 H 1/00,** B 64 F 5/00,
E 01 H 1/10

(54) Machine autoportée pour le nettoyage de grandes surfaces.

(30) Priorité: **02.04.85 FR 8504994**

(43) Date de publication de la demande:
**08.10.86 Bulletin 86/41**

(45) Mention de la délivrance du brevet:
**27.09.89 Bulletin 89/39**

(84) Etats contractants désignés:
**AT BE CH DE GB IT LI LU NL SE**

(56) Documents cités:
**CH-A- 542 325**
**DE-A- 1 658 405**
**DE-A- 2 802 161**
**FR-A- 2 191 451**
**GB-A- 1 327 901**
**US-A- 3 600 224**

(73) Titulaire: **HARDY, Société anonyme dite, 152, rue de
Conflans, F-95370 Montigny-les-Cormeilles (FR)**

(72) Inventeur: **Lesieur, Bernard, 64, rue Maurice
Reschteiner, 951100 Argenteuil (FR)**

(74) Mandataire: **Casalonga, Axel et al, BUREAU D.A.
CASALONGA - JOSSE Morassistrasse 8,
D-8000 München 5 (DE)**

## Description

Pour nettoyer de grandes surfaces telles que les parois des tunnels et souterrains sur lesquelles se déposent des résidus de fumées et goudrons provenant notamment de gaz d'échappement de véhicules, ou encore les revêtements d'avions, on utilise généralement des machines à balais rotatifs telles que celle décrites dans le document DE-A 1 658 405, ce qui entraîne pour principal inconvénient une usure rapide des balais en raison de la rugosité des parois, et la nécessité de leur renouvellement et, en conséquence, aggrave le coût de l'opération. De plus, le frottement ou la poussée des balais provoque souvent la destruction fréquente des verres ou plastiques transparents protégeant les sources lumineuses. Il est également difficile pour de telles machines à balais d'absorber des différences de niveau ou de courbure, ou encore des saillies ou chicanes telles que celles de murs anti-bruits.

On connait également, d'après le document US-A-3 600 224, une machine utilisant des jets d'air à grande vitesse melangé à un liquide de nettoyage et agissant à l'interieur de manchons textiles, ce qui conduit également à une usure très rapide de ces manchons.

La machine autoportée, objet de l'invention, agit uniquement par projection de liquide et, selon une caractéristique, elle est susceptible de projeter sur des surfaces horizontales, plafond ou sol, sur des plans verticaux inclinés ou courbes, et ces surfaces peuvent avoir une largeur comprise dans des limites étendues en raison de l'allongement susceptible d'être pris par les rampes de projection ou les bras qui les portent.

L'invention sera maintenant décrite à titre d'exemple en se référant au dessin annexé, dans lequel:

la figure 1 est une vue en élévation d'une machine conforme à l'invention montée sur la plateforme d'un camion;

la figure 2 est une vue en élévation de face de l'ensemble des rampes de distribution destinées à projeter le liquide sur les parois à nettoyer;

la figure 3 est une vue partielle en élévation du bras de machine amené dans la position de lavage du sol.

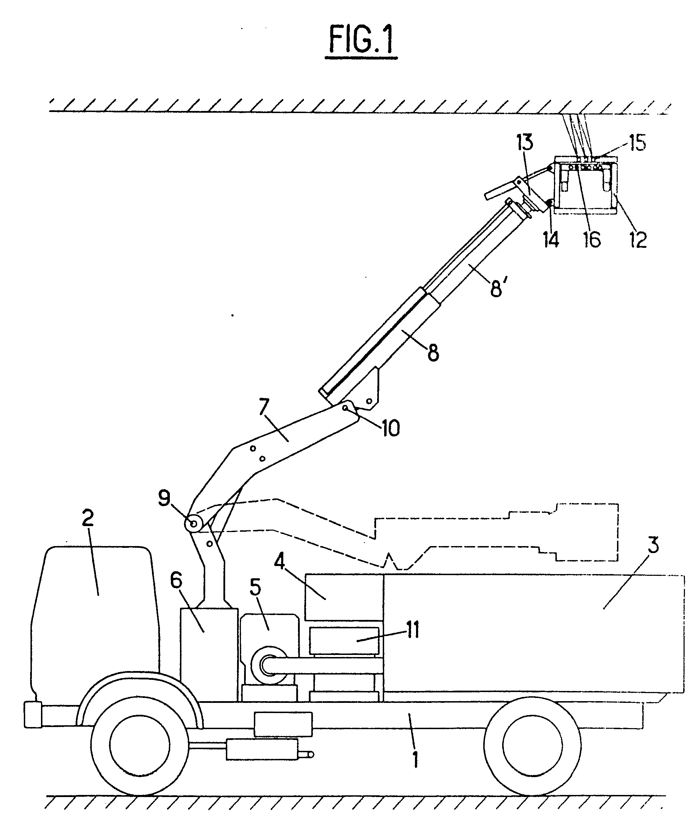

En se reportant au dessin, en particulier à la figure 1, on voit sur la plate-forme 1 d'un camion ayant une cabine de conduite 2, une machine selon l'invention qui comporte un réservoir d'eau 3, un réservoir de détergent 4, un groupe motopompe 5 actionné soit directement par un moteur thermique ou hydraulique, soit à partir du moteur du camion. Dans ce groupe il est prévu une pompe doseuse de détergent, une pompe à eau basse pression puisant l'eau dans le réservoir et une pompe haute pression pour envoyer le mélange eau – détergent ou de l'eau de rinçage seule vers les rampes de distribution. Ces différents organes bien connus n'ont pas été plus particulièrement représentés, mais font partie du groupe motopompe.

Le camion comporte également une grue hydraulique de type connu ayant un fût ou embase 6 rotative, un premier bras articulé 7 sur cette embase, et un deuxième bras 8 télescopique et articulé sur ce premier bras, les articulations 9 et 10 étant commandées par vérins hydrauliques à partir d'un tableau de commande tel que 11, portant également les électrovannes pilotées commandant les différentes pompes.

L'extrémité du deuxième bras 8 porte un cadre 12 articulé sur un plateau 13 au moyen d'une articulation 14 commandée par un vérin. Ce plateau est lui-même monté à rotation en bout de la tige télescopique 8' par un système de vérins non représentés.

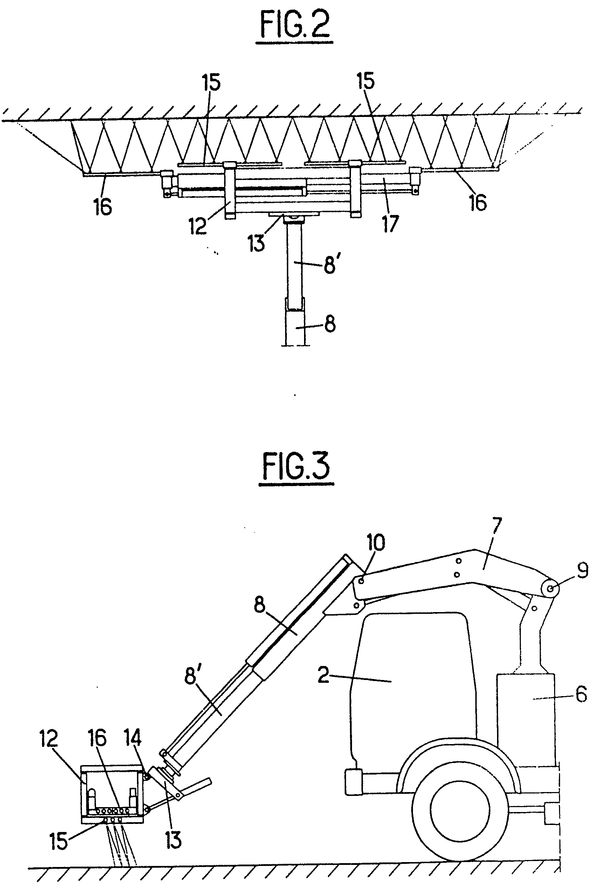

D'après la figure 2, on voit que le cadre 12 reçoit les différentes rampes de lavage, dont certaines 15 sont fixes et d'autres 16 portées en bout de bras télescopiques 17 permettant d'allonger ainsi la surface arrosée.

La rotation de la grue autour de son embase, celle des bras oscillants 7 et 8, et la rotation du cadre 13 permettent d'obtenir la position des rampes de lavage la mieux adaptée à la géométrie et à la configuration des surfaces à traiter. Le jeu des électrovannes 11 permet de faire varier le débit prévu et d'alimenter individuellement chaque rampe ou chaque portion de rampe suivant les besoins.

Les commandes des mouvements des différents éléments de l'engin, des dosages et des débits peuvent être centralisées dans la cabine 2 du véhicule porteur où sont rassemblées les commandes appropriées.

Pour le nettoyage, on amène les bras de grue et le cadre portant les rampes de lavage en position voulue pour que les jets des rampes viennent frapper les cloisons à nettoyer, plafond ou parois verticales, sous l'angle approprié, et l'on projette le mélange eau – détergent de préférence à la basse pression, pour permettre son accrochage sur la paroi. Au cours d'un deuxième passage, on lave avec de l'eau de rinçage projetée à haute pression, ce qui élimine le produit détergent qui tombe sur le sol avec la saleté.

Il est également possible, comme représenté à la figure 3, d'utiliser la même machine pour laver le sol et éviter tout dérapage de véhicule utilisateur de la voie après le nettoyage. Ceci évite d'avoir à utiliser une arroseuse pour débarrasser le sol de tout mélange résiduel. A cet effet, les bras 7 et 8 sont dirigés vers l'avant et inclinés de manière à passer au-dessus de la cabine 2 et à venir présenter le cadre-support 12 à proximité du sol en avant du camion. On peut alors donner aux jets des rampes une inclinaison optimale pour débarrasser le sol de toute solution de détergent.

## Revendications

1. Machine autoportée pour le nettoyage de grandes surfaces telles que tunnels et souterrains ou encore avions, disposée sur la plate-forme (1) d'un camion, comportant des réservoirs d'eau (3) et détergent (4), une grue orientable ayant au moins deux bras inclinables (7, 8) supportant des rampes de projection (15, 16), et des motopompes (5) et vannes (11) pour le prélèvement, le mélange, le dosage et la projection d'un liquide de nettoyage, caractérisée en ce que les rampes (15, 16) sont supportées par un cadre (12) monté à rotation autor de l'axe du deuxième bras (8), ayant une structure télescopique, une partie (15) des rampes étant fixes, les autres (16) étant portées à l'extrémité de tubes télescopiques (17) de manière à pouvoir à volonté étendre la projection du liquide par les rampes selon la largeur de la surface à nettoyer et à orienter le cadre-support en fonction de la position de la surface à nettoyer, celle-ci pouvant être horizontale, verticale ou inclinée.

2. Machine selon la revendication 1, caractérisée par ceci que les bras de la grue sont tels que le support (12) des rampes (15, 16) peut également être dirigé vers l'avant du véhicule et tourné vers le sol pour permettre le nettoyage de ce dernier.

## Patentansprüche

1. Selbstfahrende Maschine zum Reinigen von grossen Flächen wie Tunnels und Unterführungen oder auch Flugzeugen, aufgebaut auf das Fahrgestell (1) eines Lastkraftwagens, umfassend einen Wassertank (3) und einen Reinigungsmittelbehälter (4), einen schwenkbaren Kran mit mindestens zwei neigbaren Armen (7, 8), welche Spritzrohre (15, 16) tragen, und Motorpumpen (5) und Ventile (11) für die Entnahme, das Mischen, das Dosieren und das Verspritzen einer Reinigungsflüssigkeit, dadurch gekennzeichnet, dass die Spritzrohre (15, 16) von einem Rahmen (12) getragen werden, der um die Achse des zweiten, teleskopartig zusammenschiebbar ausgeführten Arms (8) drehbar ist, dass ein Teil (15) der Spritzrohre feststeht, während die anderen (16) Spritzrohre am Ende von Teleskoprohren (17) befestigt sind, so dass die Flüssigkeit durch die Spritzrohre entsprechend der Breite der zu reinigenden Fläche willkürlich über grössere Breite verspritzt werden kann, und dass der Tragrahmen je nach der Lage der zu reinigenden Fläche, die horizontal, vertikal oder schrägliegend verlaufen kann, ausrichtbar ist.

2. Maschine nach Anspruch 1, dadurch gekennzeichnet, dass die Kranarme so ausgebildet sind, dass der Tragrahmen (12) für die Spritzrohre (15, 16) auch vor das Fahrzeug geführt und gegen den Erdboden geschwenkt werden kann, um eine Bodenreinigung vorzunehmen.

## Claims

1. Vehicle-supported machine for the cleaning of large areas such as tunnels and underground installations or aircraft, disposed on the platform (1) of a lorry, comprising water (3) and detergent (4) tanks, a crane which can be pivoted having at least two arms (7, 8) which may be inclined supporting the spray banks (15, 16) and motor-driven pumps (5) and valves (11) for drawing, mixing, metering and spraying a cleaning fluid, characterized in that the banks (15, 16) are supported by a frame (12) mounted to rotate about the axis of the second arm (8) and having a telescopic structure, one portion (15) of the banks being fixed and the other portions (16) being borne on the ends of telescopic tubes (17) so that the spraying of the fluid from the banks can be extended at will in accordance with the width of the surface to be cleaned and the frame-support can be orientated as a function of the position of the surface to be cleaned which may be horizontal, vertical or inclined.

2. A machine as claimed in claim 1, characterized in that the arms of the crane are such that the support (12) for the banks (15, 16) may also be directed towards the front of the vehicle and inclined towards the ground to allow the cleaning of the latter.

## FIG.1

FIG.2

FIG.3

7